# EUROPEAN PATENT SPECIFICATION

(11) **EP 0 931 444 B1**
(45) Date of publication and mention of the grant of the patent: **17.03.2004**
(21) Application number: 98123758.9
(22) Date of filing: 14.12.1998
(51) Int. Cl.: A01C 23/04

(54) **Sprinkler head for a diluted agrochemical fluid**
Sprinklerkopf für eine verdünnte agrochemische Flüssigkeit
Tête d'arrosage pour un fluide agrochimique dilué

(30) Priority: 27.12.1997 JP 36757097; 10.02.1998 JP 4463498; 20.03.1998 JP 9277098
(43) Date of publication of application: 28.07.1999
(73) Proprietor: Miyake, Masaharu, Kawanishi-City, Hyogo-prefecture (JP); Miyake, Kazuyo, Kawanishi-City, Hyogo-prefecture (JP)
(72) Inventor: Miyake, Masaharu, Kawanishi-City, Hyogo-prefecture (JP)
(74) Representative: Müller - Hoffmann & Partner

(56) References cited:
- DE-A- 3 224 718
- US-A- 4 068 681
- US-A- 4 974 634
- US-A- 5 529 244

## Description

### BACKGROUND OF THE INVENTION

### Field of the Invention

The present invention relates to a diluted medical fluid sprinkler head for gardening use connected with a water feeding hose, with one end being connected with a faucet or the like of a service water.

### Description of the Prior Art

It is indispensable to scatter medical fluids to prevent harmful insects from becoming produced or to exterminate them in cultivating the vegetables. Generally medical fluids on the market are diluted on the order of 500 times, 1000 times or 2000 times when necessary, and the diluted medical fluids are atomized to spray them on the cultivated vegetables.

Further, any fluid fertilizers, nutritive agents or the like are diluted on the same order and scattered.

In this invention, the aforementioned medical fluids, fluid fertilizers, nutritive agents or the like are referred to as medical fluids.

As a means for diluting and scattering these medical fluids, a cap of a bottle with medical fluids being accommodated in it is normally used as a weighing measure. The medical fluid poured into the cap is mixed with a given amount of water and is diluted. Then, the dilution water of the medical fluids is moved to an atomizer tank. As another means, a given amount of water is poured to the tank of the atomizer, where the medical fluids poured into the cap are mixed and diluted.

But a scattering step of such diluted medical fluid is accompanied by inconveniences described as follows.
(1) An operation of diluting the medical fluids to a desired ratio is very troublesome. The atomized amount of the medical fluids is not constant daily, and the diluting magnification is different depending upon the type of medical fluids. Thus, it is very difficult for the general run of people to normally obtain the desired preferable dilution ratio.
(2) It is very difficult to obtain the dilution water of the medical fluids as necessary as possible for the scattering in mixing of the medical fluids with a given amount of dilution water although related to the (1). As the diluted fluid can be excessive or somehow insufficient in amount, it is often wasteful in producing the diluted fluids.
(3) Since the atomizer itself is heavy, and a tank with the dilution water of the medical fluids in it has to be carried, it is very hard to work with them carried by hands or with them placed on the shoulder.
(4) In addition to the expensive atomizer, a specific diluting vessel is required to dilute the medical fluids.
(5) Labors and time are required for the preparations of the operations such as medical fluid measuring and diluting, tank washing before the dilution, measuring cap washing and so on.
(6) In order to prevent different types of medical fluids from being mixed, it is required each time to wash the atomizer tank and the other vessel used.

DE-A-32 24 718 discloses a device for mixing an additional fluid agent with a fluid flow. The device comprises a main body having an open passage, wherein a container for an additional fluid agent is attached to said main body, and wherein a suction tube in communication with the open passage leads into the container. The open passage is configured as a venturi tube such that the additional fluid agent is sucked into the open passage when a fluid flows through the open passage.

### SUMMARY OF THE INVENTION

A first task of this invention is to mainly obtain for the general people the desired dilution ratio of the medical fluids with ease and accuracy, and further to easily obtain the dilution water of the medical fluids in the necessary amount. Further, it is to conduct the preparation work of the medical fluid scattering with ease, and to provide the operation with lower cost with the simple construction.

In addition to the first task, a second tasks is to manufacture a head main body with considerable ease and low cost.

In addition to the first and second tasks, a third task is to further manufacture the head main body more easily.

In addition to the first through the third tasks, a fourth task is to obtain the basic dilution water with accuracy and ease.

In addition to the first through the fourth task, a fifth task is to increase the simplicity of the operation at hand to further improve the use.

In order to solve such technical tasks as described above, this invention basically provides a sprinkler head according to claim 1, comprising a head main body, connected through a hose with a faucet or the like of the service water, with a normally open flow-speed increasing passage which permits the service water as jet water current, to have an open passage connected through accommodation with a bottle where the medical fluid is accommodated in it, and a plurality of water flowing passages each having a make and break valve.

According to the means, by sucking the medical fluid with the jet water current from the bottle, and mixing the medical fluid with the jet water current, the basic dilution water can be obtained easily. And by mixing the basic dilution water with the service water flowing down from one of the plurality of water flowing passages or from the plural number, the dilution magnification of the medical fluid can be freely changed large or small.

The invention has the following configurations.

A head main body has a water feeding hose connecting portion provided at its one end, and a connecting portion of a sprinkler provided at the tip end with a sprinkling nozzle, at its other end. The head main body is formed in a straight-line shaped tube body, and the connection between the water feeding hose and the sprinkler is conducted through a connector to be engaged with a screw to be formed in both the longitudinal ends of the straight-line shaped tube body. This head main body is independently provided with a plurality of water flowing passages. One of a plurality of water flowing passages is formed into an open passage where the service water normally flows. The open passage is composed of a specific small-diameter passage for sucking the medical fluids and a specific large-diameter passage for downstream of the service water. A flow-speed increasing passage where the passage diameter is partially narrowed is formed in the specific small-diameter passage where the medical fluid is sucked.

The flow-speed increasing passage is connected, for accommodation through the medical fluid sucking passage where the medical fluid within the medical fluid bottle is sucked, with the engaging means of the medical fluid bottle provided on the peripheral wall of the head main body. The medical fluid is sucked from the medical fluid sucking passage and is mixed with the service water by the jet water current of the service water flowing down through the flowing-speed increasing passage. All the passages including the open passage are merged in the tip end and are formed to flow down to the sprinkling nozzle.

The dilution ratio of the medical fluids is to be changed by the combination of one of the flow water passages or more and the open passage.

By the means, a hose with a faucet or the like of the service water is connected with one end of the sprinkler head, and the sprinkler is connected with the other end. The service water is flowed to the hose by opening the faucet and water is sprinkled from the sprinkler.

As the passage narrowing portion is provided in the sprinkler head, the flow speed of the service water is increased by the passage narrowing portion, so that the jet water current is caused to reduce the pressure. As the result, the medical fluid within the bottle is pushed by the air atmosphere and is sucked into the medical fluid sucking passage. The sucked medical fluid is discharged from the medical fluid discharging opening of the passage, and is flowed down on the jet water current. The medical fluid passing the small-diameter passage is stirred and diluted by the service water flowing down the large-diameter passage. Thus, the basic dilution water can be obtained.

At this time, the medical fluid within the bottle is accurately sucked by the specific passage for sucking it, namely, by the small-diameter passage.

By mixing the basic dilution water with the service water flowing from one or a plural number of a plurality of water flowing passages provided in the head main body, the dilution magnification of the medical fluid can be freely changed in size with easy and accuracy.

By keeping the other water flowing passages closed with using only the open passage, the dilution fluid highest in concentration can be obtained.

In this manner, the sprinkler of this invention is provided with a plurality of water flowing passages free in make and brake, in addition to the open passage. Open one or more of the water flowing passages properly to flow down the service water, and the dilution fluid and the service water, of the open passage, which are normally in the water flowing condition, are properly mixed at a desired mixture ratio, by the mixing portion of the sprinkler head. As the result, the dilution ratio is increased as desired.

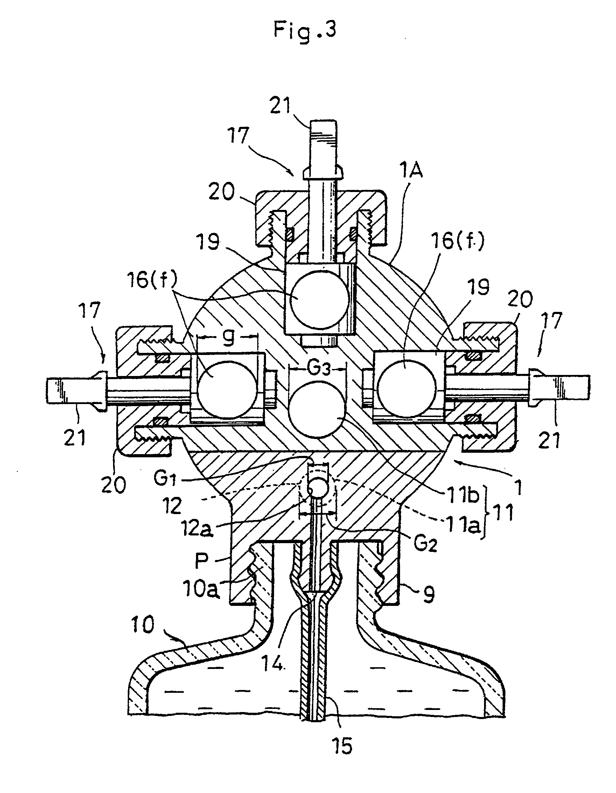

As described in Fig. 3, a construction can be adopted where all the water flowing passages are set to a passage diameter where all the water flowing passages become the same in water flowing amount as in the open passage. When the dilution ratio of the open passage is 500 times, the dilution ratio is increased to 1000 times by opening one water flowing passage. The dilution ratio is increased subsequently to 1500 times when the water flowing passage is two, and to 2000 times when three.

The sprinkler head for the medical fluid dilution of this invention, simply by engaging the medical fluid bottle with the sprinkling head, can sprinkle the medical fluid dilution water on the cultivating vegetables with water flowing force of service water or the like. Thus, an expensive atomizer and a specific vessel for the medical fluid dilution are made unnecessary. A desired dilution ratio can be obtained with ease by simple construction for making and breaking the water flowing passage, and a simple operation. As the result, the medical fluid dilution water as much as necessary can be sprinkled easily without bothers with easy operations.

Sprinkle it with the medical fluid bottle being disengaged from, and the service water flowing the open passage is flowed down together with the medical fluid remaining in the medical fluid sucking passage. Thus, when the different types of medical fluids are scattered, there is not possibility of being mixed with the medical fluids of the other medical fluid bottle.

Close the medical fluid sucking passage with the medical fluid bottle being disengaged from, and only the service water can be sprinkled. Thus, the scattering of the dilution water of the medical fluids and the scattering of the service water can be exchanged freely.

Consequently, the present invention has following effects.

A bottle with the medical fluid being accommodated is engaged with the bottle engaging means, and the medical fluids of the desired dilution ratio can be scattered with a simple operation of opening and closing the make and break valve. An expensive atomizer and a specific vessel for the medical fluid dilution become unnecessary, removing all the bothersome preparations. The dilution ratio can be changed by the considerable light and easy operations of opening and closing the make and break valve of the water flowing passage. As the result, the general people can sprinkle the medical fluid dilution water as much as possible on the cultivating vegetables easily without the bothers.

By provision of the specific small-diameter passage for sucking the medical fluids in the open passage, the disturbance conditions can be reduced as soon as possible and the sucking operation of the medical fluids can be conducted with more accuracy, whereby the basic dilution ratio of the medical fluid tends to retain ideally.

The medical fluid diluted water can be scattered on the cultivating vegetables with the water flowing force of the service water or the like simply by engaging the medical fluid bottle with the sprinkling head. Thus, the expensive atomizer and the specific vessel for the medical dilution fluids become unnecessary. The desired dilution ratio can be easily obtained with the simple construction of opening and closing the water flowing passage, and the simple operation. As the result, the medical fluid dilution water as much as possible can be scattered lightly without bother with easy operations.

Sprinkle with the medical fluid bottle being disengaged from, and the service water flowing down the open passage flows down together with the medical fluid remaining in the medical fluid sucking passage. Thus, there is no possibility of mixing the medical fluids of the other medical fluid bottle in scattering the different types of medical fluids.

Close the medical fluid sucking passage by disengaging the medical fluid bottle from, and only the service water can be sprinkled. Thus, the dilution water of the medical fluids or the service water only can be optionally exchanged.

The passage narrowing portion, partially narrowed in the passage diameter, can be manufactured with the simple construction.

In this invention, as shown in claim 2, the head main body can be formed in the straight-line shaped tube body, and the connection between the water feeding hose and the sprinkler can be desirably conducted through a connector engaged with a screw to be formed in both the longitudinal ends of the straight-line shaped tube body.

The head main body can be manufactured with considerable ease and low price. Especially if the synthetic resin is a raw material, the manufacturing can be conducted with considerable ease and low price.

As described in claim 3, the narrowing passage portion including the engaging means of the bottle is composed of another body from the main body, and it is desirable to adopt a construction that the narrowing passage portion is fixed to a mounting concave portion formed to the head main body in a shape continuous to the specific small-diameter passage for sucking the medical fluids.

It is considerably easy to manufacture with lower cost to compose, as another body, a position provided with a composite construction, of the positions for composing the head main body, as compared with a case where the whole is composed of one collected piece body from the beginning.

As described in claim 4, the open passage is set in the uppermost position of the head main body, and the small- diameter passage and the large-diameter passage of the open passage are formed in that the former, in the upper position, is formed in a specific passage for sucking the medical fluid and the latter, in the lower position, is formed in a specific passage for downstream of the service water current, so that the engaging means is provided on the peripheral wall on the upper side of the head main body. It is desirable to adopt the construction with the medical fluid bottle is engaged downwards in its mouth portion.

By position of the medical fluid bottle opening portion downwards on the upper side of the head main body, the inner medical fluid is flowed down by gravity by the passage narrowing portion positioned in the uppermost position of the head main body and is positively sucked by the jet water current to be caused by the passage narrow portion. Inconvenience is hard to cause that the medical fluid cannot be sucked properly from the bottom interior due to the size change of the pressure of the service water. Also, independently of the existence of the pressure change in the service water, the dilution ratio of the basic dilution water can be maintained constant with accuracy and ease.

It is preferable to add a construction where the narrowing passage portion including the engaging means of the bottle is another body from the head main body, a construction where the head main body is a straight-line shaped tube body, or a construction that the connection between the water feeding hose and sprinkler is conducted through a connector to be engaged with a screw to be formed on both the longitudinal ends of the straight-line shaped tube body, and further a construction provided with the passage narrowing portion.

The head main body can be manufactured with further ease and low cost. The head main body can be made more easily and lower cost, especially when the synthetic resin is a raw material.

As described in claim 5, it is desirable to provide a water guiding tube having a make and break valve for opening and closing the whole passage constructed in another body, in the water feeding hose side end portion of the head main body.

It is considerably simple to manufacture with ease and lower cost by adopting a means of composing, as another body, a position provided with a composite construction, of the positions for composing head main body, as compared with a case where the whole is composed of one collected piece body from the beginning. Especially by using the synthetic resin raw material, the object is exhibited with more clearance. Because the simplicity of the operation at hand is increased and the using convenience is further improved by provision of the make and break valve of the whole passage.

### BRIEF DESCRIPTION OF THE DRAWINGS

Fig. 1 shows a first embodiment of a sprinkler head for the medical fluid dilution of this invention, and is a partially notched longitudinally sectional view of a sprinkler head with a medical fluid bottle being engaged with.
Fig. 2 shows the first embodiment of a sprinkler head for the medical fluid dilution of this invention, and is an enlarged longitudinal sectional view of essential portions of the sprinkler head with a medical fluid bottle shown in Fig. 1 being engaged with.
Fig. 3 shows the first embodiment of a sprinkler head for the medical fluid dilution of this invention, and is a partially notch-enlarged sectional view taken along a line A - A of Fig. 1.
Fig. 4 shows the first embodiment of a sprinkler head for the medical fluid dilution of this invention, and is an enlarged explosive perspective view of the essential portions.
Fig. 5 shows a second embodiment of a sprinkler head for the medical fluid dilution of this invention, and is an enlarged longitudinal sectional view of essential portions of the sprinkler head with a medical fluid bottle being engaged with.
Fig. 6 shows the second embodiment of a sprinkler head for the medical fluid dilution of this invention, and is an enlarged explosive perspective view of the essential portions.
Fig. 7 is a third embodiment of a sprinkler head for the medical fluid dilution of this invention, and is a partially notched longitudinally sectional view of a sprinkler head with a medical fluid bottle being engaged with.

### DESCRIPTION OF THE PREFERRED EMBODIMENTS

Some preferred embodiments of a sprinkler head for the medical fluid dilution according to this invention will be described referring to the drawings.

### (First Embodiment)

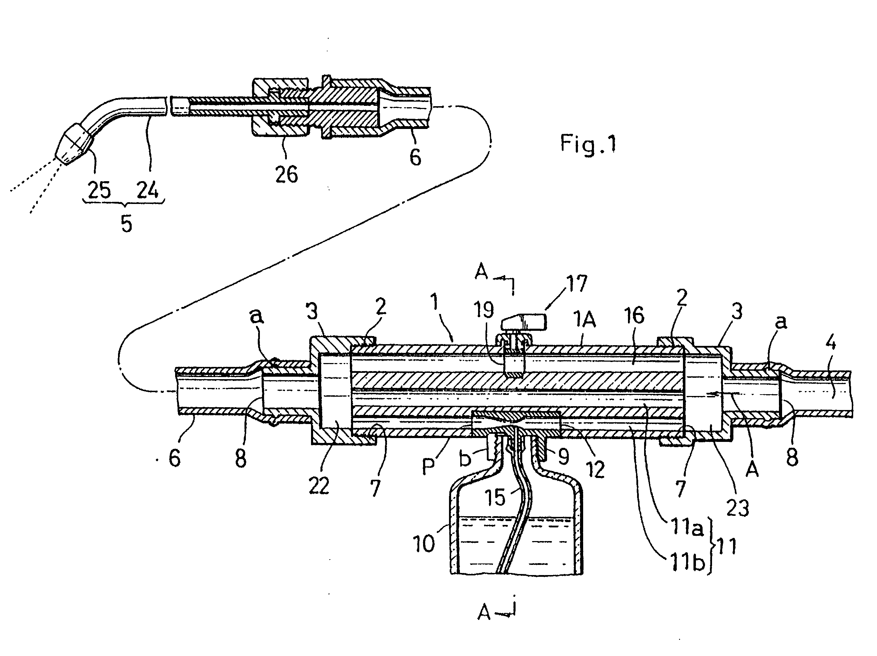

Figs. 1 through 4 show a first embodiment.

Reference numeral 1 in the drawings is a head main body provided with a water feeding passage A. The head main body 1 is basically formed the same in diameter free from a bundle and an overhang along its full length. Namely, the head main body is formed into a straight-line shaped tube body 1A. A male screw 2 is provided respectively on the external peripheral faces of both the longitudinal ends.

Connecting caps 3 as connectors are respectively screwed to the male screws 2 provided on the external peripheral face of both the longitudinal ends of the straight-line shaped tube body 1A. The water feeding hose 4 is connected with the connecting hose 6 to be connected with the sprinkler 5 through these connecting caps 3. The other end of the water feeding hose 4 is connected with a faucet of the water service not shown.

Both the connecting caps 3 are respectively formed larger in diameter on the side where they are connected with the straight-line shaped tube body 1A. A female screw 7 is provided on the inner face of the large diameter. The female screw 7 is engaged into the male screw 2 formed into the end of the straight-line shaped tube body 1A. Both the connecting caps 3 have a small diameter connecting tube 8 integrally on the other end side. The small-diameter connecting tube 8 has a ring-shaped rib a for hose connection use on the external peripheral face.

The end portions of the water feeding hose 4 and the connecting hose 6 are engaged onto the connecting tube 8. Although not shown, a clamping ring is engaged on the external side of the mutual connecting portion when necessary, so as to prevent the hose from coming off.

Three components are adopted of the straight-line shaped tube body 1A, a male screw 2 formed on both the ends, and a connecting cap 3 to be connected with a female screw 7. Thus, the head main body 1 can be manufactured with considerable ease and low cost. Especially by adopting the synthetic resin raw material, the manufacturing operation is conducted with considerable ease and low cost.

Reference numeral 9 shows a female screw tube portion which becomes an engaging means of a bottle 10 with medical fluids being accommodated in it. The female screw tube portion 9 is provided to screw the male screw opening portion 10a of the medical fluid bottle 10. The female screw tube portion 9 is formed a so-called slit passage b for breathing to connect the inner space of the medical fluid bottle 10 externally.

Reference numeral 11 is an open passage formed serially with the water feeding passage A, which is provided with a shaft line parallel to that of the head main body 1.

The open passage 11 is composed of a lower small- diameter passage 11a and an upper large-diameter passage 11b. The passage diameter ratio between the passage diameter G₂ of the small-diameter passage 11a and the passage diameter G₃ of the large-diameter passage 11b is set within the range of 1 : 4 through 2 : 3. In the lower small-diameter passage 11a, a passage narrowing portion 12 which narrows the width of the service water as shown in the inner wall is formed. Reference numeral G of Fig. 3 shows the diameter of the open passage, namely, the total of the passage diameter G₂ of the small diameter passage 11a and the passage diameter G₃ of the large-diameter passage 11b. Reference numeral G₁ shows the passage diameter of the passage narrowing portion 12.

Thus, when the service water flows to the passage narrowing portion 12, the flow speed becomes larger (becomes a jet water current). The passage narrowing portion 12 is composed of a bundle provided on the tube inner face in about the middle of the small-diameter passage 11a. This bundle sequentially swells the tube inner face in about the middle of the small-diameter passage 11a in the downstream direction of the service water. Later it is formed to turn to the given passage diameter G₂ of the small-diameter passage 11a again.

The passage narrowing portion 12 is positioned in the upper portion of the female screw tube portion 9 of the medical fluid bottle 10. The medical fluid discharging opening 13 is opened immediately before the maximum swollen portion 12a, namely, in the passage wall on the upper side in the downstream direction of the service water. The medical fluid discharging opening 13 is connected for communication with the interior of the medical fluid bottle 10.

In the concrete construction, a medical fluid sucking passage 14 is formed through the tube wall of the head main body 1. A flexible tube 15 is connected with the medical fluid sucking passage 14. As shown, the flexible tube 15 is open in the bottom portion within the medical fluid bottle 10. The medical fluid discharge opening 13 is mutually connected for communication with the interior with the medical fluid bottle 10 by the medical fluid sucking passage 14 and the flexible tube 15.

Thus, as the service water flows down at a high velocity in the passage narrowing portion 12, the pressure is reduced. At the result, the medical fluid within the medical fluid bottle 10 is sucked into the medical fluid sucking passage 14 through the tube 15. The medical fluid sucked into the medical fluid sucking passage 14 is sucked in a small amount through the medical fluid discharging opening 13 and is finally stirred and diluted in the service water.

Three water flowing passages 16 each being the same in diameter are formed in the specified interval around the axial line of the head main body 1, apart from the opening passage 11, in the straight-line shaped tube body 1A for forming the head main body 1. In the respective intermediate passages, a cock type make and break valve 17 is provided. Each make and break valve 17 is arranged that a valve box 18 is formed on the way to the respective water flowing passage 16 and a rotary valve body 19 provided with a passage f is built in the valve box 18. An operation lever 21 is serially provided in the rotary valve body 19 through the valve cover 20, and the respective water flowing passage 16 can be independently opened and closed.

The diameter g of each water flowing passage 16 is formed in the passage diameter G (G₂ + G₃) through addition of the small diameter passage 11a of the open passage 11 and the large-diameter passage 11b. The diameter ratio between the diameter of each water flowing passage 16 and the diameter of the open passage 11 is designed to be 1 : 1.

The passage diameter g of each water flowing passage 16 is formed the same in size as the passage diameter G of the open passage 11. The open passage 11 and a plurality of water flowing passages 16 are almost the same in amount in the respective discharge.

For example, when the medical fluid is designed to be diluted 500 times in the open passage 11, the following diluting operation is obtained according to the construction of the illustrated example. When the service water is flowed down by opening one of the flowing water passage 16, the medical fluid is diluted as much as 1000 times. Similarly, when two water flowing passages 16 are opened, the medical fluid is diluted as much as 1500 times. When all the water flowing passages 16 are opened, the medical fluid is diluted as much as 2000 times.

A mixing passage 22 is formed on the inner side of the connecting cap 3 on the side where the connecting hose 6 is connected with. The mixing passage 22, provided with volume sufficient to mix the water flowing down the open passage 11 and the three water flowing passages 16, mixes the medical fluid and the service water flowing down them. This mixture makes it possible to dilute as much as desired 500 through 2000 times. An expanding passage 23 is formed even on the inner side of the connecting cap 3 on the side where the water feeding hose 4 is connected with. The expanding passage 23 is also provided with volume sufficient to flow down the water to the open passage 11 and the three water flowing passages 16.

The sprinkler 5 mounted in order of a water guiding tube 24, and a sprinkling nozzle 25 from the head main body 1 is connected for its free detachable operation with the tip end of the head main body 1. The diluted fluid flowing down from the head main body 1 is jetted at a high velocity. The sprinkler 5 with respect to the head main body 1 is mounted through the screw connecting with the end of the water guiding tube 24 through a coupling 26.

A passage narrowing portion 12 formed on the small- diameter passage 11a of the open passage 11 and a female screw tube portion 9 as the engaging means to be provided integrally with it are constructed as another body from the straight-line shaped tube body 1A.

The concrete configuration is as follows. The range to be formed on another body is as follows.

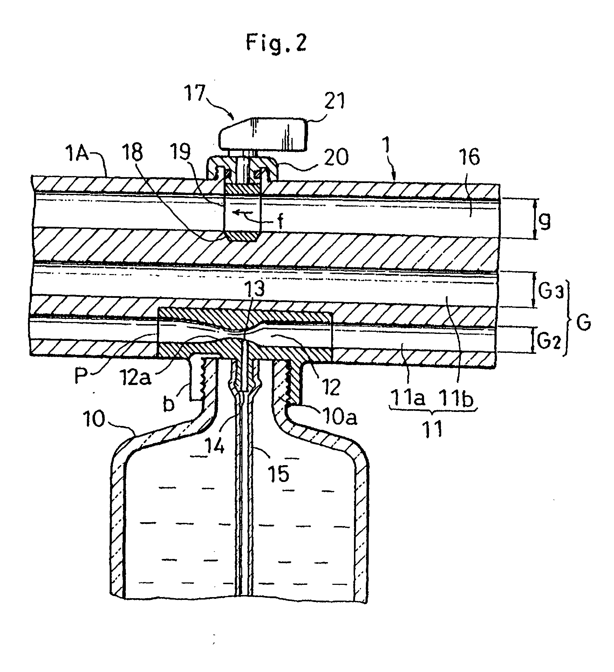

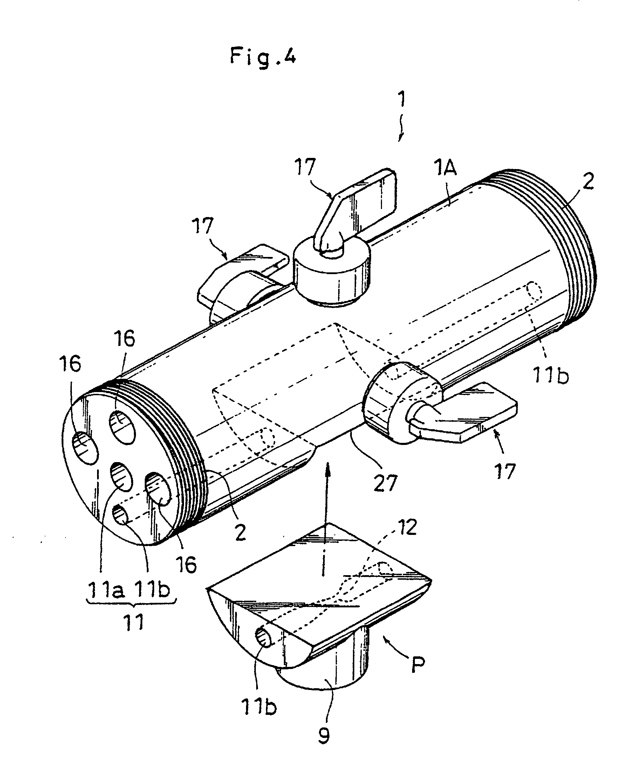

In the service water downstream direction, as shown in Fig. 2, it is a range to a position reaching the maximum longitudinal passage diameter around the passage narrowing portion 12 of the small-diameter passage 11a. As shown in Fig. 3, the upper portion is a lower range from a position along the imaginary horizontal line passing slightly lower than the lowermost end of the large-diameter passage 11b of the open passage 11. This position is formed on another body (piece P) separate from the straight-line shaped tube body 1A, including the female screw tube portion 9 as shown especially in Fig. 4.

In the straight-line shaped tube body 1A is formed a concave portion 27, where the passage narrowing portion 12 is engaged with the piece P to be formed integrally including the female screw tube portion 9. The straight-line shaped tube body 1A and the piece P are integrally joined by a proper means with the piece P being engaged with the concave portion 27. The welding means, which is, for example, a synthetic resin molding product, uses a bonding agent. Also, when it is metal, a means such as depositing or the like is adopted.

The manufacturing operation has advantages of being considerably easier and lower in cost as compared with a case where the whole is constructed to be one piece integrated from the beginning by the adoption of means for constructing, as another body, a position provided with composite construction, of each position for constructing the whole sprinkler head. This object is much more exhibited especially by the use of the synthetic resin raw material.

The function of the first embodiment will be described hereinafter.

A water feeding hose 4 is connected with the rear end portion of the head main body 1. The medical fluid bottle 10 is engaged with the bottle engaging means 9. In order to obtain the desired diluting ratio, the necessary number of a plurality of water flowing passages 16 are selected. The necessary operations are conducted by opening the corresponding make and break valve 17. When the water flows, the service water flows down the open passage 11 and the flowing velocity increases by the passage narrowing portion 12. The service water flows down to the mixing passage 22 due to the decreased pressure.

The service water flows down the passage narrowing portion 12 at a high velocity, thus reducing the pressure in the area of the passage narrowing portion 12. As the result, the medical fluid within the bottle 10 is sucked into the medical fluid sucking passage 14 through the flexible tube 15. The medical fluid is discharged in a very small amount through the medical fluid discharging opening 13 and is flowed down with the service water.

The medical fluid passes the small-diameter passage 11a so that it is stirred and diluted to the service water flowing down the large-diameter passage 11b in the mixing passage 22. Thus, it is diluted to, for example, 500 times in the given dilution ratio.

When the water flowing passage 16 is open, the service water flows to the water flowing passage 16 from the water feeding passage A. As the result, the service water is mixed, in the mixing passage 22, with the diluted water flowing down from the open passage 11. The dilution ratio of the dilution water is much increased by this mixing. In this manner, a four-level dilution ratio of 500 times, 1000 times, 1500 times and 2000 times can be easily obtained in accordance with the open number of the water flowing passage 16.

The dilution water of the medical fluid is guided to the water guiding tube 24 from the mixing passage 22, and finally is jetted with force from the sprinkling nozzle 25 of the tip end.

The change in the dilution ratio can be achieved with lighter and simpler operations of opening and closing of the water flowing passage 16 by the switching operation of the make and break valve 17 provided on the peripheral wall of the head main body 1. Thus, the medical fluid dilution water can be sprinkled, onto cultivated vegetables, as much as possible easily without bothers.

The sucking of the medical fluids can be operated with more efficiency by the provision of the specific passage for sucking the medical fluid, namely, of the small-diameter passage 11a.

Sprinkle with the medical fluid bottle 10 disengaged from, and the medical fluids, remaining the medical fluid sucking passage 14 is washed away and is discharged with the service water. Thus, when the different medical fluid is sprinkled, the different medical fluid has no possibility of being mixed carelessly even if the bottle is changed to a medical bottle 10 with different medical fluid contained in it.

### (Second Embodiment)

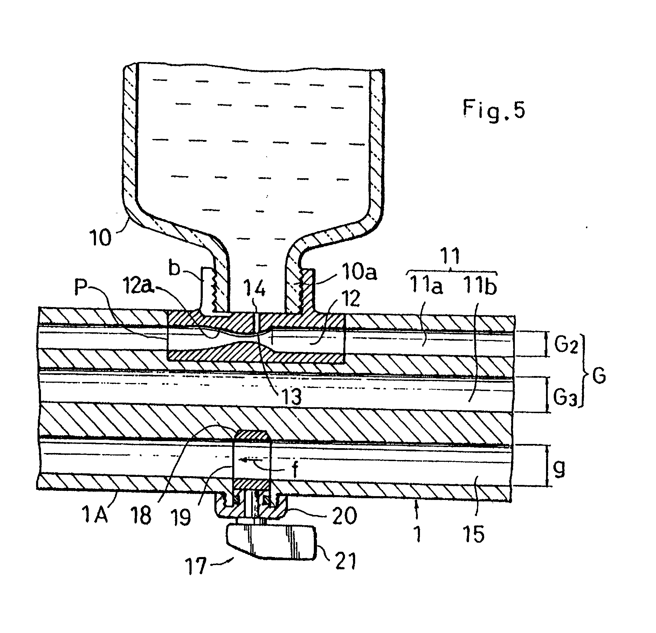

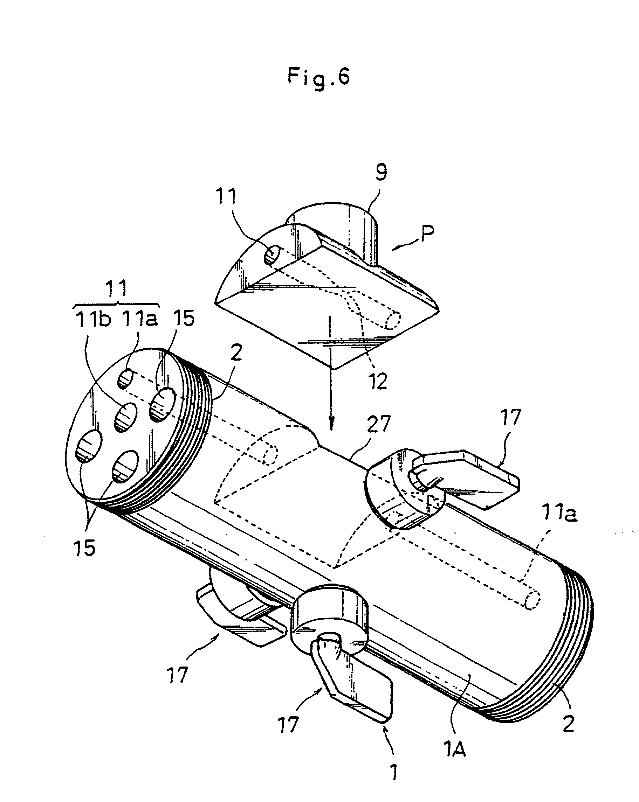

Fig. 5 through Fig. 7 show a second embodiment.

A fundamental idea of the second embodiment is that the passage narrowing portion 12 provided for obtaining the jet water current to suck the medical fluid is formed in the uppermost position of the head main body 1, and the medical fluid bottle 10 is engaged with the periphery on the upper side of the head main body 1, whereby the medical fluid can be fed even by the natural flowing by using the gravity from above to the passage narrowing portion 12.

By positioning of the opening portion 10a on the upper side of the head main body 1 with the portion 10a of the medical fluid bottle 10 being downwards, the medical fluid within the medical fluid bottle 10 flows down to the passage narrowing portion 12 naturally by gravity. It is positively sucked even by the jet water current to be caused by the passage narrowing portion 12. Thus, the basic diluted water can be obtained with accuracy and ease. The general people can obtain with ease and accuracy the desired dilution ratio of the medical fluid by mixing the service water, into the basic dilution water, flowing down from one or the plural number, of a plurality water flowing passages 16 provided in the head main body 1. Namely, the dilution magnification of the medical fluid can be freely changed in size with ease. Further, the medical fluid dilution water of necessary amount can be obtained with ease.

The concrete configuration of the second embodiment will be described hereinafter.

The fundamental idea of the second embodiment is that, as described above. the medical fluid can be fed even by natural flowing with using the gravity with the medical fluid bottle 10 being positioned above the head main body 1. In the construction, the top and bottom of the head main body 1 are reversed as compared with those of the first embodiment. In another construction, the second embodiment is fundamentally the same as the first embodiment. The same reference numerals are used as in those of the first embodiment in the same configurations. The detailed descriptions are omitted.

In the second embodiment, as shown in the drawing, the female screw tube portion 9 which is an engaging means of the bottle 10 where the medical fluid is accommodated is opened upwards on the upper peripheral wall of the head main body 1. The medical fluid bottle 10 is screwed and engaged by the upside down of the bottle 10 so that the male opening portion 10a may be made downward. In the female screw tube portion 9 is formed a so-called breathing slit passage b for maintaining the atmospheric pressure with the internal space of the medical fluid bottle 10 being communicated externally.

Accordingly, a tube 15 is not necessary as in the first embodiment.

The open passage 11, within the head main body 1, is set in the uppermost position. The small-diameter passage 11a of the open passage 11 is set in position upwards and the large-diameter passage 11b downwards.

The passage narrowing portion 12 is formed in the lower portion of the engaging means 9 of the medical fluid bottle 10. The medical fluid discharging opening 13 open immediately before the maximum swollen portion 12a and the interior portion of the medical fluid bottle 10 are directly connected in communication through the medical fluid sucking passage 14 drilled through the tube wall of the head main body 1.

Since the service water flows down at a high velocity in the passage narrowing portion 12, the pressure is reduced. As the result, the medical fluid within the medical fluid bottle 10 is sucked efficiently into the medical fluid sucking passage 14, helped through the natural flowing by the gravity. The medical fluid sucked into the medical fluid sucking passage 14 is discharged through the medical fluid discharging opening 13 so that the discharged medical fluid flows down by the service water.

The medical fluid passing the small-diameter passage 11a is stirred and diluted, by the mixing passage 22 and the large diameter passage 11b, into the service water flowing down the large-diameter passage 11b. Thus, it is diluted to. for example, 500 times in the given dilution ratio.

When the water flowing passage 16 is open, the service water flows even to the water flowing passage 16 from the water feeding passage A. As the result, the service water is mixed, by the mixing passage 22, with the dilution water flowing down from the open passage 11. The dilution ratio of the dilution water is much increased by this mixing. In this manner, a four-level dilution ratio of 500 times, 1000 times, 1500 times and 2000 times can be easily obtained in accordance with the open number of the water flowing passage 16.

The dilution water of the medical fluid is guided to the water guiding tube 24 from the mixing passage 22, and finally is jetted with force from the sprinkling nozzle 25 of the tip end.

In the second embodiment, there are further the next advantages in addition to the first embodiment.

With the engaging means 9 of the medical liquid bottle 10 being provided on the peripheral wall on the upper side of the head main body 1, the medical fluid bottle 10 to be engaged here is engaged with the male screw opening portion 10a in its downward posture, so that the inner medical fluid flows down to the small-diameter passage 11a through the medical fluid sucking passage 14 naturally by the gravity and the function of sucking the medical fluid by the passage narrowing portion 12 is achieved with more accuracy and efficiency.

### (Third Embodiment)

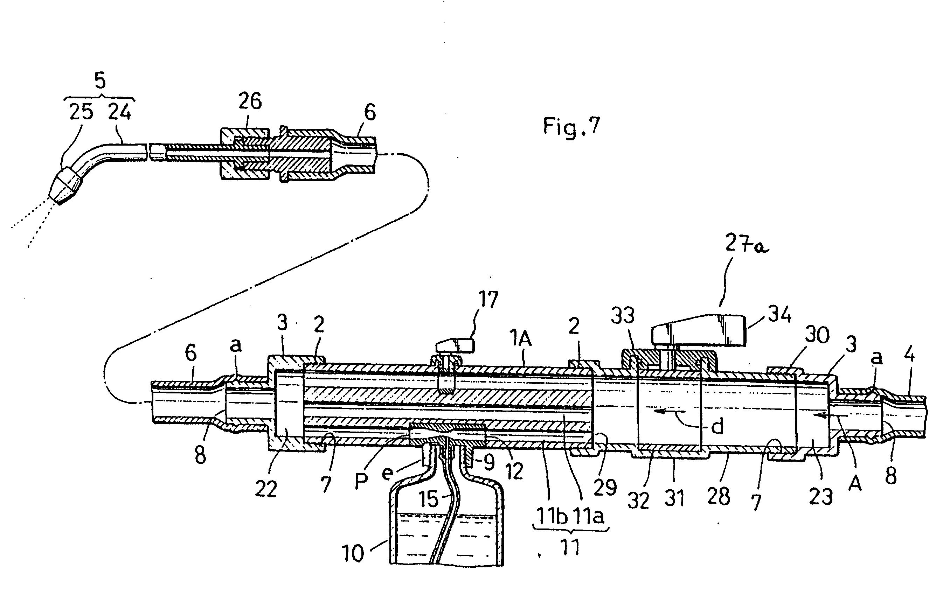

Fig. 7 shows a third embodiment.

The fundamental idea of a third embodiment is that the operation simplicity at hand is increased by provision of the make and break valves of the whole passage so as to further improve the using easiness.

The concrete configuration of the third embodiment will be described hereinafter.

The fundamental idea of the third embodiment is to improve the operation simplicity at hand to further improve using easiness by provision of the make and break valves of the whole passage, as described above. In the construction, there is a difference in the make and break valve as another construction, from the head main body 1 on the upper stream side of the head main body 1 as compared with the first and second embodiments. In other construction, the third embodiment is fundamentally the same as the first, second embodiments. The same reference numerals are used as in those of the first and second embodiments in the same configurations. The detailed descriptions are omitted.

Concretely a water guiding tube 28 provided with a make and break valve 27a is connected with the side of the water feeding hose 4 of the head main body 1. The water guiding tube 28 is provided with a female screw 29 in the side end of the head main body 1, and is engaged integrally with the head main body 1 by screwing with the male screw 2 of the side end of the water feeding hose 4 of the head main body 1. A male screw 30 is formed on the external periphery of the side end portion of the water feeding hose 4. The connecting cap 3 on the side of the water feeding hose 4 is engaged with the male screw 30 through the female screw 7. The manufacturing operation of the head main body can be made easier to do considerably with the make and break valve 27a of the whole passage as another body construction.

The make and break valve 27a is one of a cock type. As shown in the drawing, a valve box 31 is formed on the downstream side of the head main body 1 and a rotary valve body 32 provided with the passage d is built in the valve box 31. An operation lever 34 is serially provided in the rotary valve body 32 through the valve cover 33 to do the making and breaking of the water feeding passage A and the water amount adjustment.

In the third embodiment, a means is adopted of composing a position, provided with a composite construction, as another body, of positions for composing the head main body. By this configuration, the manufacturing operation can be conducted with considerably ease and low price as compared with a case where the whole is constructed as one collected piece from the beginning. This object is exhibited more especially by using the synthetic resin raw material.

Also, the construction of each embodiment can be mutually diverted or combined in a range not deviated from the desired objects of this invention.

## Claims

1. A sprinkler head for diluted medical fluid wherein
a head main body (1) provided with a connecting portion of a water feeding hose (4) at its end, and a connecting portion of a sprinkler (5) provided its tip end with a sprinkling nozzle (25) at its other end is formed in a straight-line shaped tube body;
a plurality of water flowing passages (11, 16) to be opened and closed by make and break valves (17) and an open passage (11) where the service water can always flow down are independently provided respectively in the head main body;
the open passage (11) is composed of a specific small-diameter passage (11a) for sucking the medical fluids and a specific large-diameter passage (11b) of the service water downstream;
a flowing speed increasing passage (12) where the passage diameter is partially narrowed is formed in the small-diameter passage;
an engaging means (9) of a medical fluid bottle (10) provided on the peripheral wall of the head main body, and the flowing speed increasing passage (12) are connected, for communication through the medical fluid sucking passage (14) where the medical fluid within the medical fluid bottle (10) is sucked, where the medical fluid is sucked from the medical fluid sucking passage (14) and is mixed with the service water by the jet water current of the service water flowing down into the flowing speed increasing passage (12);
all the passages (11, 16) including the open passage are merged in the tip end and are formed so as to flow down to the sprinkling nozzle (25) to change the diluation ratio of the medical fluid by one of the flow water passages or more and the combination with the open passage.

2. A sprinkler head for diluted medical fluid according to claim 1, where the connection of the water feeding hose (4) and the sprinkler is conducted through a connector engaged with a screw to be formed on both the longitudinal ends of the straight-line shaped tube body.

3. A sprinkler head for diluted medical fluid according to either of claim I or 2, where the narrowing passage portion (12) including the engaging means of the bottle is constructed as another body from the head main body (1), and the open passage is fixed to a mounting concave portion formed to the head main body in such a shape as the narrowing passage portion is continuous to the specific small-diameter passage for sucking the medical fluid.

4. A sprinkler head for diluted medical fluid according to either of claim 1 through 3, where the open passage is positioned in the uppermost position of the head main body (1), and the small-diameter passage (11a) and the large-diameter passage (11b) of the open passage (11) are formed in that the former, in the upper position, is formed in a specific passage for sucking the medical fluid and the latter, in the lower position, is formed in a specific passage downstream of the service current, so that the engaging means is provided on the peripheral wall on the upper side of the head main body, where the medical fluid bottle is engaged downwards in its mouth portion.

5. A sprinkler head for diluted medical fluid according to either of claim 1 through 4, where a water guiding tube having make and break valves (17) for opening and closing the whole passages constructed in another body is provided in the water feeding hose side end portion of the head main body.

## Patentansprüche

1. Sprinklerkopf für ein verdünntes pharmakologisches Fluid, bei dem
- ein Kopf-Hauptkörper (1) mit einem Anschlussabschnitt für einen Wasserzuführschlauch (4) an seinem Ende und einem Anschlussabschnitt eines Sprinklers (5) an seinem Vorderende mit einer Sprinklerdüse (25) an seinem anderen Ende in einem geradlinig geformten Rohrkörper ausgebildet ist;
- mehrere Wasserströmungskanäle (16), die durch Öffnungs/Schließ-Ventile (17) geöffnet und geschlossen werden können, und ein offener Kanal (11), durch den immer das Versorgungswasser entlangfließt, jeweils unabhängig im Kopf-Hauptkörper vorhanden sind;
- der offene Kanal (11) aus einem speziellen Kanal (11a) kleinen Durchmessers zum Ansaugen der pharmakologischen Fluide und einem speziellen Kanal (11b) großen Durchmessers auf der stromabwärtigen Seite des Versorgungswassers zusammengesetzt ist;
- im Kanal kleinen Durchmessers ein die Strömungsgeschwindigkeit erhöhender Kanal (12) ausgebildet ist, in dem der Kanaldurchmesser teilweise verengt ist;
- eine Eingriffseinrichtung (9) für eine Flasche (10) mit pharmakologischem Fluid an der Umfangswand des Kopf-Hauptkörpers und der Kanal (12) zum Erhöhen der Strömungsgeschwindigkeit verbunden sind, um für Verbindung durch den Ansaugkanal (14) für pharmakologisches Fluid zu sorgen, wo das pharmakologische Fluid innerhalb der Flasche (10) für pharmakologisches Fluid angesaugt wird, wobei das pharmakologische Fluid durch die Wasserstrahlströmung des im Kanal (12) zum Erhöhen der Strömungsgeschwindigkeit entlangfließenden Versorgungswassers aus dem Ansaugkanal (14) für pharmakologisches Fluid angesaugt und mit dem Versorgungswasser vermischt wird;
- wobei alle Kanäle (11, 16) einschließlich des offenen Kanals am Vorderende zusammenlaufen und sie so ausgebildet sind, dass eine Strömung zur Sprinklerdüse (25) erfolgt, um das Verdünnungsverhältnis des pharmakologischen Fluids durch einen oder mehreren der Wasserströmungskanäle und die Kombination mit dem offenen Kanal zu ändern.

2. Sprinklerkopf für ein verdünntes pharmakologisches Fluid nach Anspruch 1, bei dem die Verbindung des Wasserzuführschlauchs (4) und des Sprinklers über einen Verbinder erfolgt, der mit einer Schraube in Eingriff steht, die an beiden Längsenden des geradlinig geformten Rohrkörpers auszubilden ist.

3. Sprinklerkopf für verdünntes pharmakologische Fluid nach Anspruch 1 oder Anspruch 2, bei dem der Kanalverengungsabschnitt (12) mit der Eingriffseinrichtung für die Flasche als anderer Körper als der Kopf-Hauptkörper (1) ausgebildet ist und der offene Kanal an einem konkaven Montageabschnitt angebracht ist, der mit solcher Form am Kopf-Hauptkörper ausgebildet ist, dass der Kanalverengungsabschnitt kontinuierlich mit dem speziellen Kanal kleinen Durchmessers zum Ansaugen des pharmakologischen Fluids verläuft.

4. Sprinklerkopf für verdünntes pharmakologisches Fluid nach einem der Ansprüche 1 bis 3, bei dem der offene Kanal an der obersten Position des Kopf-Hauptkörpers (1) positioniert ist und der Kanal (11a) kleinen Durchmessers und der Kanal (11b) großen Durchmessers dadurch gebildet sind, dass der erstere, an der oberen Position, in einem speziellen Kanal zum Ansaugen des pharmakologischen Fluids ausgebildet ist, und der letztere, an der unteren Position, in einem speziellen Kanal ausgebildet ist, der stromabwärts betreffend die Versorgungsströmung liegt, so dass die Eingriffseinrichtung an der Umfangswand der Oberseite des Kopf-Hauptkörpers vorhanden ist, wo die Flasche mit pharmakologischem Fluid mit ihrem Öffnungsabschnitt nach unten in Eingriff steht.

5. Sprinklerkopf für verdünntes pharmakologisches Fluid nach einem der Ansprüche 1 bis 4, bei dem ein Wasserführungsrohr mit Öffnungs/Schließ-Ventilen (17) zum Öffnen und Schließen der gesamten Kanäle, die in einem anderen Körper ausgebildet sind, im wasserzuführschlauchseitigen Endabschnitt des Kopf-Hauptkörpers vorhanden ist.

## Revendications

1. Tête de pulvérisation pour un fluide médical dilué, dans laquelle
un corps principal de tête (1) pourvu, à l'une de ses extrémités, d'une partie de raccordement d'un tuyau d'arrivée d'eau (4) et, à son autre extrémité, d'une partie de raccordement d'un pulvérisateur (5) pourvu à son extrémité terminale d'une buse de pulvérisation (25), est réalisé sous la forme d'un corps tubulaire rectiligne ;
plusieurs passages d'écoulement d'eau (11, 16) destinés à être ouverts et fermés par des clapets d'ouverture et de fermeture (17) et un passage ouvert (11) dans lequel l'eau de service peut s'écouler en permanence vers l'aval sont respectivement prévus de manière indépendante dans le corps principal de tête ;
le passage ouvert (11) se compose d'un passage de petit diamètre spécifique (11a) pour l'aspiration des fluides médicaux et d'un passage de grand diamètre spécifique (11b) pour l'écoulement de l'eau de service vers aval ;
un passage d'augmentation de vitesse d'écoulement (12) dont le diamètre est partiellement rétréci est formé dans le passage de petit diamètre ;
un moyen d'accouplement (9) d'une bouteille de fluide médical (10) situé sur la paroi périphérique du corps principal de tête, et le passage d'augmentation de vitesse d'écoulement (12) sont reliés afin de communiquer par l'intermédiaire du passage d'aspiration de fluide médical (14) dans lequel le fluide médical contenu dans la bouteille de fluide médical (10) est aspiré, le fluide médical étant aspiré à partir du passage d'aspiration de fluide médical (14) et mélangé avec l'eau de service par le courant sous pression de l'eau de service s'écoulant vers l'aval dans le passage d'augmentation de vitesse d'écoulement (12) ;
tous les passages (11, 16), y compris le passage ouvert, se rejoignent dans l'extrémité terminale et sont conçus de manière à permettre un écoulement jusqu'à la buse de pulvérisation (25) pour modifier le rapport de dilution du fluide médical grâce à l'un au moins des passages d'écoulement d'eau et à sa combinaison avec le passage ouvert.

2. Tête-de pulvérisation pour un fluide médical dilué selon la revendication 1, dans laquelle le raccordement du tuyau d'arrivée d'eau (4) et du pulvérisateur est réalisé par l'intermédiaire d'un raccord en prise avec un filetage formé sur les deux extrémités longitudinales du corps tubulaire de forme rectiligne.

3. Tête de pulvérisation pour un fluide médical dilué selon la revendication 1 ou 2, dans laquelle la partie de passage rétréci (12), comprenant le moyen d'accouplement de la bouteille, est réalisée sous la forme d'un autre corps différent du corps principal de tête (1), et le passage ouvert est fixé à une partie concave de montage définie sur le corps principal de tête avec une forme telle que la partie de passage rétréci est contiguë au passage de petit diamètre spécifique destiné à l'aspiration du fluide médical.

4. Tête de pulvérisation pour un fluide médical dilué selon l'une quelconque des revendications 1 à 3, dans laquelle le passage ouvert est situé dans la position la plus haute du corps principal de tête (1), tandis que le passage de petit diamètre (11a) et le passage de grand diamètre (11b) du passage ouvert (11) sont réalisés de telle façon que le premier, dans la position supérieure, est formé dans un passage spécifique destiné à l'aspiration du fluide médical, et le second, dans la position inférieure, est formé dans un passage spécifique en aval du courant de service, afin que le moyen d'accouplement soit situé sur la paroi périphérique du côté supérieur du corps principal de tête en bas, où la bouteille de fluide médical est engagée tête dans la partie d'embouchure de celui-ci.

5. Tête de pulvérisation pour un fluide médical dilué selon l'une quelconque des revendications 1 à 4, dans laquelle un tube de guidage d'eau comportant des clapets d'ouverture et de fermeture (17) pour ouvrir et fermer la totalité des passages situés dans un autre corps, est prévu dans la partie d'extrémité, côté tuyau d'arrivée d'eau, du corps principal de tête.
